# EUROPÄISCHE PATENTSCHRIFT

(11) **EP 1 319 458 B1**
(45) Veröffentlichungstag und Bekanntmachung des Hinweises auf die Patenterteilung: **03.11.2010**
(21) Anmeldenummer: 01129305.7
(22) Anmeldetag: 13.12.2001
(51) Int. Cl.: B23F 21/03, B23F 19/05

(54) **Verfahren zur Herstellung eines innenverzahnten Honrings**
Method of manufacturing an internally toothed honing tool
Procédé de fabrication d'un outil à denture intérieure de rodage

(43) Veröffentlichungstag der Anmeldung: 18.06.2003
(73) Patentinhaber: THE GLEASON WORKS, Rochester, New York 14607-1282 (US)
(72) Erfinder: Reichert, Gerhard, 82216 Maisach (DE); Schauer, Engelbert, 85716 Unterschleissheim (DE)
(74) Vertreter: Kraus, Jürgen Helmut

(56) Entgegenhaltungen:
- DE-C- 4 323 935
- DE-C- 4 345 169
- US-A- 2 913 858

## Beschreibung

Die Erfindung betrifft ein Verfahren zur Herstellung eines innenverzahnten Honrings auf einer Honmaschine mit einer Werkzeugspindel und einer Werkstückspindel, deren Achsen sich kreuzen und die mit eigenen Antrieben antreibbar sind.

Zum Feinbearbeiten der Zahnflanken von zahnradförmigen Werkstücken werden Honmaschinen benutzt, die ein innenverzahntes Werkzeug, den sogenannten Honring aufweisen. Dieser Honring besteht üblicherweise aus Schleifmittel, das mit Kunststoff, Keramik oder Metall gebunden ist. Zur Herstellung eines solchen Honrings wird ein unverzahnter Ring aus abrasivem Material zunächst durch Schleifen auf den Nenn-Innendurchmesser gebracht und sodann mit einer Form-Schleifscheibe im Einzelteilverfahren geschliffen. Dieser Herstellungsvorgang, bei dem jeder Zahn des Honrings einzeln geschliffen wird, ist sehr zeitaufwendig. Ein weiterer Nachteil dieses bekannten Verfahrens besteht darin, daß für jeden Eingriffswinkel und Zahnmodul des Honrings eine eigene Schleifscheibe mit entsprechend angepaßtem Profil erforderlich ist. Beim Schleifen der Zahnlücken in den Honringrohling im Einzelteilverfahren wird eine zylindrische Innenverzahnung erzeugt. Es hat sich gezeigt, daß ein mit einem solchen Honring bearbeitetes Zahnrad eine Verzahnung aufweist, die den geometrischen Erfordernissen nur unzureichend gerecht wird.

In Anbetracht der vorstehend geschilderten Nachteile des Standes der Technik liegt der Erfindung die Aufgabe zugrunde, ein Verfahren zur Herstellung eines innenverzahnten Honrings zu schaffen, das sich durch eine hohe Wirtschaftlichkeit auszeichnet.

Das erfindungsgemäße Verfahren ist dadurch gekennzeichnet, daß ein unverzahnter Honringrohling auf der Werkzeugspindel einer Honmaschine gespannt und mit einem auf der Werkstückspindel der Honmaschine gespannten außenverzahnten Werkzeug in Berührung gebracht, im Synchronlauf mit der Drehbewegung des Werkzeugs angetrieben und dabei radial zugestellt wird.

Mit dem erfindungsgemäßen Verfahren läßt sich ein innenverzahnter Honring in einem Bruchteil der Zeit herstellen, die bei dem bekannten Schleifen eines Honringrohlings im Einzelteilverfahren erforderlich ist. Wenn ein Honringrohling in der erfindungsgemäßen Weise auf einer Honmaschine bearbeitet wird, dann erhält die Honringverzahnung infolge des Achskreuzwinkels in der Mantelfläche des Innendurchmessers, das heißt der Hüllkurve eine gekrümmte Form. Zudem hat sich gezeigt, daß ein mit einem solchen Honring mit gekrümmter Mantelfläche bearbeitetes verzahntes Werkstück eine Verzahnung aufweist, die genau den geometrischen Erfordernissen entspricht. Das erfindungsgemäße Verfahren ermöglicht somit nicht nur eine wirtschaftlichere Herstellung eines Honrings, sondern die mit einem solchen Honring bearbeiteten zahnradförmigen Werkstücke zeichnen sich auch durch eine hohe Qualität der Verzahnungsgeometrie aus, insbesondere Rundlauf- und Teilungsfehler.

Die von den Herstellern angebotenen unverzahnten Honringrohlinge haben häufig nicht den gewünschten Innendurchmesser, so daß vor der Erzeugung der Innenverzahnung zunächst in einem gesonderten Arbeitsgang der Nenn-Innendurchmesser des Honringrohlings erzeugt werden muß. Dieser zusätzliche Arbeitsvorgang wurde nach dem Stand der Technik auf einer gesonderten Maschine in einer gesonderten Einspannung des Honringrohlings durchgeführt. Gemäß einer Weiterbildung des erfindungsgemäßen Verfahrens ist vorgesehen, daß der unverzahnte Honringrohling vor der Erzeugung der Verzahnung mittels eines auf der Werkstückspindel der Honmaschine gespannten schleifscheibenartigen Werkzeugs auf den Nenn-Innendurchmesser gebracht wird. Die Erzeugung der Verzahnung erfolgt dann in der gleichen Aufspannung des Honrings. Es wird lediglich das schleifscheibenartige Werkzeug gegen ein außenverzahntes Werkzeug ausgetauscht.

Die Erfindung wird nachstehend anhand eines Ausführungsbeispiels näher beschrieben. Es zeigen:
Fig. 1 den Aufbau einer zur Durchführung des erfindungsgemäßen Verfahrens geeigneten Honmaschine in einer perspektivischen Ansicht, und
Fig. 2 und 3 einen vertikalen bzw. horizontalen Schnitt durch den Arbeitsraum der Honmaschine in vereinfachter Darstellung.

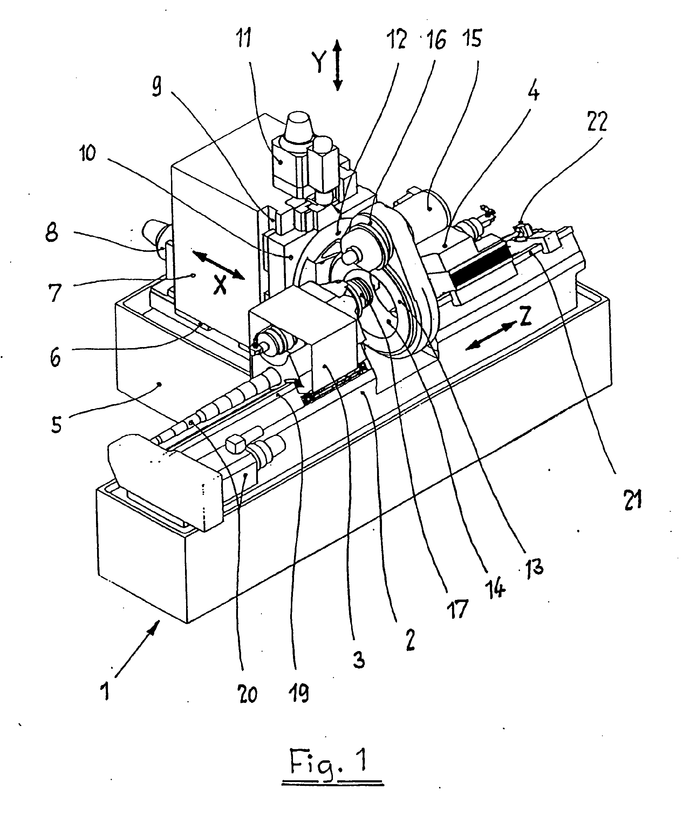

Die in den Fig. 1 bis 3 gezeigte Honmaschine ist aus der DE 43 23 935 A1 bekannt. Diese Honmaschine besitzt ein Maschinengestell 1, das etwa die Form eines liegenden T hat. Der dem Querbalken des T entsprechende Bereich an der Vorderseite der Maschine bildet ein Maschinenbett 2, auf dem ein Spindelstock 3 und ein Reitstock 4 verschiebbar angeordnet sind. Auf dem anderen, sich etwa in der Mitte des Maschinenbetts 2 im rechten Winkel dazu nach hinten erstreckenden Bereich 5 des Maschinengestells 1 ist in einer Längsführung 6 ein horizontaler Schlitten 7 in Pfeilrichtung X verschiebbar und dafür mit einem Motor 8 antreibbar angeordnet. An seiner dem Bett 2 zugewendeten Seite besitzt der Horizontalschlitten 7 eine Vertikalführung 9, in der ein Vertikalschlitten 10 in Pfeilrichtung Y höhenverstellbar und dafür mit einem Motor 11 antreibbar angeordnet ist. An der dem Horizontalschlitten 7 abgewendeten Seite weist der Vertikalschlitten 10 eine in Fig. 1 nur angedeutete Rundführung 12 auf, in der ein Werkzeugkopf 13 um eine in X-Richtung liegende Achse A winkeleinstellbar aufgenommen ist. Dabei ragt der Werkzeugkopf 13 im wesentlichen zwischen den Spindelstock 3 und den Reitstock 4. In einer zentralen Öffnung 14 des Werkzeugkopfs 13 ist ein innenverzahntes Werkzeug, ein sogenannter Honring T drehantreibbar aufgenommen. Der Antrieb dafür erfolgt mit einem Motor 15 über ein nur angedeutetes Getriebe 16 mit spielfrei vorgespannten Zahnrädern oder einem Kettentrieb. Die Honmaschine ist - wie aus der DE 27 11 282 A1 bekannt - mit elektronisch gekoppelten Einzelantrieben für das Werkzeug T und für das Werkstück W ausgerüstet. Der in den Figuren nicht dargestellte Antrieb für das Werkstück W ist dabei im oder am Spindelstock 3 untergebracht.

Der Spindelstock 3 und der Reitstock 4 sind mit Einrichtungen 17, 18 zum Spannen eines zahnradförmigen Werkstücks W versehen, das sich bei seiner Bearbeitung im Inneren der Werkzeugs T mit diesem in kämmendem Zahneingriff befindet. Die Werkstückachse C2, die erwähnte Achse A und - bei nicht geschwenktem Werkzeug T - die Werkzeugachse C1 liegen dabei in einer Ebene. Zum Wechseln des Werkstücks W wird es aus dem Werkzeug T herausgefahren. Dazu ist der Reitstock 3 auf dem Bett 2 in einer Führung 19 mittels eines Antriebs 20 in Pfeilrichtung Z verschiebbar. Der Reitstock 4 wird in einer Führung 21 ebenfalls in Pfeilrichtung nachgeführt, wofür eine nicht dargestellte Steuerung und ein hydraulischer Antrieb 22 vorgesehen sind. Um beim Bewegen von Spindelstock 3 und Reitstock 4 die Wirkung der Spanneinrichtungen 17, 18 nicht zu beeinträchtigen, muß der Reitstock 4 bei einer Bewegung nach links im Sinne der Fig. 1 gewissermaßen voreilen und bei einer Bewegung nach rechts verzögern.

Jede der Pfeilrichtungen X, Y und Z verläuft senkrecht zu den beiden anderen.

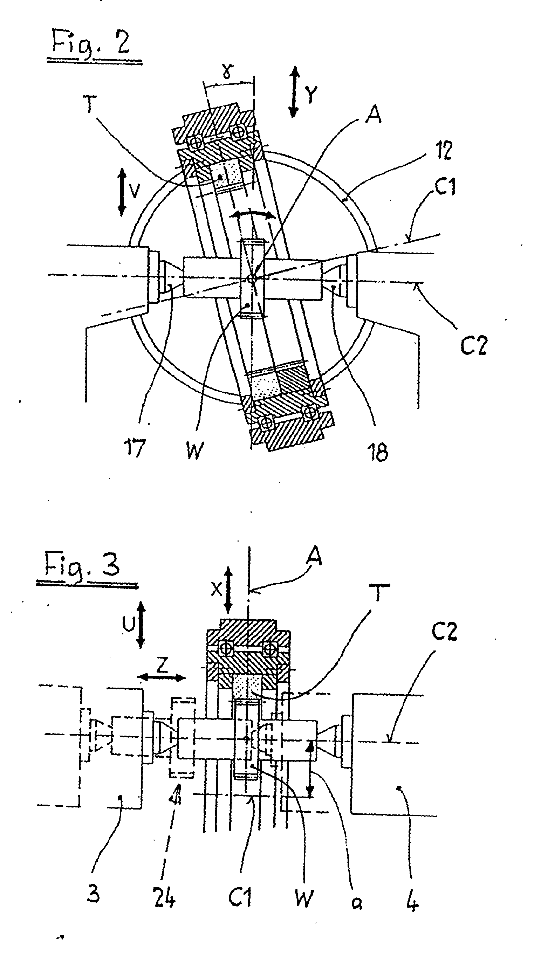

Das Werkzeug W ist ein innenverzahntes Honrad mit einer abrasiven, d. h. keine geometrisch definierten Schneidkanten aufweisenden Oberfläche seiner Zahnflanken zum Feinbearbeiten von insbesondere gehärteten Werkstücken. Es kann auch wesentlich breiter sein als in Fig. 3 gezeigt oder - wie in der unteren Hälfte von Fig. 2 gezeigt - über die Breite seiner Flanken unterschiedliche Strukturen aufweisen zum Schruppen und Schlichten. In diesem Fall muß das Werkzeug T bei der Bearbeitung relativ zum Werkstück W vershiftet werden, um seine verschiedenen Flankenbereich zum Einsatz zu bringen.

Zum Feinbearbeiten mit einem Honrad wird mit einem Achskreuzwinkel y zwischen der Werkzeugachse C1 und der Werkstückachse C2 gearbeitet. Dabei wird der Werkzeugkopf 13 mit dem Werkzeug T um die Achse A geschwenkt, so daß die Achse C1 schräg zur Achse C2 steht, die immer in Pfeilrichtung Z verläuft. Die Zustellbewegung des Werkzeugs T relativ zum Werkzeug W im Sinne einer Veränderung des Achsabstandes a erfolgt durch eine Bewegung des Horizontalschlittens 7 in Pfeilrichtung X. Für eine beim Parallel- und Diagonalverfahren erforderliche Relativbewegung zwischen Werkzeug T und Werkstück W in Achsrichtung C2 wird die erwähnte. Möglichkeit, den Spindelstock 3 zu verschieben und den Reitstock 4 nachzuführen, ausgenutzt, wobei dieser Bewegung beim Diagonalverfahren eine senkrecht dazu gerichtete Bewegung des Werkzeugs T überlagert wird, die durch Verschieben des Vertikalschlittens 10 in Pfeilrichtung Y bewerkstelligt wird.

Es hat sich gezeigt, daß eine derartige Honmaschine nicht nur die Feinbearbeitung eines zahnradförmigen Werkstücks, sondern auch die Profilierung eines unverzahnten Honringrohlings ermöglicht. Zu diesem Zweck wird ein unverzahnter Honringrohling anstelle des Werkzeugs T in dem Werkzeugkopf 13 gespannt. Falls der Innendurchmesser des Honringrohlings kleiner sein sollte als der erforderliche Nenn-Innendurchmesser, wird mit den Spanneinrichtungen 17 und 18 des Spindelstocks 3 bzw. des Reitstocks 4 ein schleifscheibenartiges Werkzeug gespannt. Der Honring und das schleifscheibenartige Werkzeug werden sodann mit den zugeordneten Antrieben in eine Drehbewegung versetzt und radial zugestellt. Die Zustellbewegung des Honringrohlings relativ zu dem schleifscheibenartigen Werkstück im Sinne einer Veränderung des Achsabstandes erfolgt wie bei dem vorstehend beschriebenen Honvorgang durch eine Bewegung des Horizontalschlittens 7 in Pfeilrichtung X. Nachdem von dem Honringrohling durch Schleifen genügend Material abgetragen wurde, bis der Nenn-Innendurchmesser erreicht ist, wird der Achsabstand durch eine Bewegung des Horizontalschlittens 7 in der entgegengesetzten Richtung wieder vergrößert, und das schleifscheibenartige Werkzeug wird durch ein zahnradartiges Werkzeug ersetzt. Dieses zahnradartige Werkzeug, dessen Profil demjenigen des zu erzeugenden Honrings entspricht, ist ein mit Hartstoff, insbesondere Diamant beschichtetes Zahnrad. Dieses mit Hartstoff beschichtete Zahnrad wird im Synchronlauf mit der Drehbewegung des Honrings angetrieben und dabei radial zugestellt. Dieser Bearbeitungsvorgang ist mit einem Honvorgang vergleichbar, wobei aber der Honring die Rolle des Werkstücks und das mit Hartstoff beschichtete Zahnrad die Rolle des Werkzeugs übernimmt.

In einem praktischen Versuch wurde ein Honringrohling mit einem Innendurchmesser von 212 mm in einer Zeit von zwei Minuten durch Schleifen auf den Nenn-Innendurchmesser von 222 mm gebracht. Die Drehzahl des Honringrohlings betrug 600 U/min, und der durchschnittliche Vorschub betrug 2,5 mm/min. Die zu erzeugende Innenverzahnung des Honrings hatte einen Modul von 1,75 mm. Der Honringrohling und das mit Hartstoff beschichtete Werkzeug wurden über ein elektronisch zwangsgekoppeltes Getriebe im Synchronlauf angetrieben und in Berührung gebracht. Die Drehzahl des Honringrohlings betrug 300 U/min, und der durchschnittliche Vorschub (radial getaucht) betrug 0,7 mm/min. Die abgerichtete Zahnhöhe betrug 5,8 mm. Der reine Abrichtvorgang war in vier Minuten abgeschlossen, während die Gesamtzeit für die Profilierung des Honrings einschließlich Nebenzeit ca. zehn Minuten betrug. Ein mit dem in dieser Weise hergestellten Honring bearbeitetes verzahntes Werkstück zeigte eine Verzahnung, die genau den geometrischen Erfordernissen entsprach.

Wenn der Innendurchmesser des unverzahnten Honringrohlings bereits den Nenn-Innendurchmesser entspricht, dann kann der Schleifvorgang entfallen und unmittelbar mit der Profilierung mittels des mit Hartstoff beschichteten zahnradartigen Werkzeugs begonnen werden.

Für den Fachmann ist erkennbar, daß das vorstehend beschriebene Verfahren auch zur Herstellung eines außenverzahnten Honrades geeignet ist. In einem solchen Fall müßte das mit Hartstoff beschichtete Zahnrad eine Innenverzahnung aufweisen. Das Honrad und das mit Hartstoff beschichtete Werkzeug würden gegenüber dem vorstehend beschriebenen Beispiel ihre Positionen tauschen.

### Bezugszeichenliste:

- 1: Maschinengestell
- 2: Bett
- 3: Spindelstock
- 4: Reitstock
- 5: Bereich von 1
- 6: Längsführung
- 7: Horizontalschlitten
- 8: Motor für 7
- 9: Vertikalführung
- 10: Vertikalschlitten
- 11: Motor für 10
- 12: Rundführung
- 13: Werkzeugkopf
- 14: Öffnung in 13
- 15: Motor für T
- 16: Getriebe
- 17: Spanneinrichtung von 3
- 18: Spanneinrichtung von 4
- 19: Führung für 3
- 20: Antrieb
- 21: Führung für 4
- 22: Antrieb
- 23: - -
- 24: Übergabeposition
- 25: Handhabungseinrichtung

- a: Achsabstand
- A: Achse von 12
- C1: Werkzeugachse
- C2: Werkstückachse
- T: Werkzeug
- W: Werkstück
- X: Horizontalbewegung von 7 u. T
- Y: Vertikalbewegung von 9 u. T
- Z: Horizontalbewegung von W
- γ: Achskreuzwinkel

## Patentansprüche

1. Verfahren zur Herstellung eines innenverzahnten Honrings auf einer Honmaschine mit einer Werkzeugspindel und einer Werkstückspindel, deren Achsen sich kreuzen und die mit eigenen Antrieben antreibbar sind, mit folgenden Schritten :
ein unverzahnter Honringrohling wird auf der Werkzeugspindel der Honmaschine gespannt und mit einem auf der Werkstückspindel der Honmaschine gespannten außenverzahnten Werkzeug in Berührung gebracht, im Synchronlauf mit der Drehbewegung des Werkzeugs angetrieben und dabei radial zugestellt.

2. Verfahren nach Anspruch 1, wobei der unverzahnte Honradrohling vor der Erzeugung der Verzahnung mittels eines auf der Werkstückspindel der Honmaschine gespannten schleifscheibenartigen Werkzeugs auf den Nenn-Innendurchmesser gebracht wird.

## Claims

1. A method of manufacturing an internally toothed honing ring on a honing machine having a tool spindle and a workpiece spindle, the axes of which cross and which can be driven with their own drives, comprising the following steps:
a non-toothed honing ring blank is clamped on the tool spindle of the honing machine and brought into contact with an externally toothed tool clamped on the workpiece spindle of the honing machine, driven in synchronism with the rotary motion of the tool, and thus forwarded radially.

2. The method according to Claim 1, the non-toothed honing wheel blank being brought to the nominal inner diameter before producing the teeth by means of a grinding disc-type tool clamped on the workpiece spindle of the honing machine.

## Revendications

1. Procédé de fabrication d'une couronne de honing à denture interne sur une machine de honing présentant une broche pour outil et une broche pour pièce à usiner, dont les axes se croisent et qui peuvent être entraînées par des dispositifs d'entraînement propres, comportant les étapes suivantes :
une ébauche de couronne de honing non dentée est montée sur la broche pour outil de la machine de honing et est mise en contact avec un outil à denture externe monté sur la broche pour pièce à usiner de la machine de honing, elle est entraînée en synchronisme avec le mouvement de rotation de l'outil et subit ainsi une avancée dans le sens radial.

2. Procédé selon la revendication 1, dans lequel l'ébauche de roue de honing non dentée est amenée au diamètre intérieur nominal, avant que ne soit réalisée sa denture, au moyen d'un outil de type disque de meulage monté sur la broche de pièce à usiner de la machine de honing.
